# EUROPEAN PATENT SPECIFICATION

(11) **EP 1 366 996 B1**
(45) Date of publication and mention of the grant of the patent: **26.07.2006**
(21) Application number: 03425326.0
(22) Date of filing: 21.05.2003
(51) Int. Cl.: B65D 3/06, B65D 85/36

(54) **A frustoconical container of paper material for sweet goods, cakes or foodstuffs in general**
Ein kegelstumpfförmiger Behälter aus Papiermaterial für Süsswaren, Kuchen oder Lebensmittel im Allgemeinen
Un récipient tronconique de matériau en papier pour des confiseries, des gateaux ou des aliments en général

(30) Priority: 28.05.2002 IT MI20021149
(43) Date of publication of application: 03.12.2003
(73) Proprietor: NOVACART S.P.A., 23846 Garbagnate Monastero (Lecco) (IT)
(72) Inventor: Anghileri, Gianmario, 23864 Malgrate (Lecco) (IT)
(74) Representative: Tansini, Elio Fabrizio

(56) References cited:
- FR-A- 2 708 576
- GB-A- 477 980
- GB-A- 611 325
- GB-A- 2 328 431
- US-A- 2 145 481

## Description

The present invention relates to a container for sweet goods, cakes, or foodstuffs in general, such as baked sweet goods, savoury and sweet risen goods and others.

It is known that containers of paper material used for cooking and, when cooking is over, packaging of foods and in particular sweets, known in the art as "bun cases", have a bottom (which is usually flat) and a flared side wall, generally pleated so as to form longitudinally extending ridges and furrows starting from the bottom towards the opening opposite thereto.

These containers or bun cases are inserted into each other for storage so that they form stacks of reduced bulkiness and easy transportation.

During use, to mechanically pick up each bun case from the stack in which it is inserted a special apparatus is generally employed which is equipped with a picking-up head having a pair of suction cups to be introduced into the cavity of the innermost bun case in the stack and with a pair of arms that from the outside press the stack where the bun case to be picked up is placed, so that two diametrically opposite regions of the bun case come close to each other and are pushed against the suction cups.

When gripping of the innermost bun case has been completed by the suction cups, which bun case therefore momentarily keeps a partly deformed conformation, the arms are moved away and spring-back to a natural shape of the stack formed of the other bun cases is enabled.

The picking-up head by its translation can thus separate the innermost bun case from the piled up cases and can conveniently convey it to the place of use.

The picking-up technique for removal of a bun case from a stack as briefly described above has serious limits, in particular when the bun cases have a fruscoconical shape (i.e. they have a bottom of substantially circular contour and a completely pleated side wall extending from the bottom to an opening of circular contour as well).

In this case, in fact, the suction cups of many types of picking-up apparatus, as they come into contact with pleated regions, often do not succeed in establishing an appropriate grip force with the innermost bun case, so that more than one bun case is extracted each time from the stack, instead of a single one.

To obviate the above mentioned drawback, bun cases with a non circular bottom can be used, which bun cases however have a bottom of delimited elongation (i.e. they have two opposite rectilinear stretches and two connecting semicircles therebetween); in these bun cases pleating is only present on the side wall corresponding to the two semicircles of the bottom so that there are two flat faces (extending from the rectilinear stretches) ensuring a good grip by the suction cups.

Unfortunately, these elongated bun cases obviously do not allow sweet goods or foodstuffs with a base of substantially circular shape to be obtained and further they need to be correctly oriented when automatic filling of same with the intended food product takes place (while, on the contrary, no orientation is required as far as bun cases of circular bottom are concerned where any diametrical axis is practically a symmetry axis).

In addition, in preparing given sweet types, that are well known to consumers, the shape appears to be a decisive factor: in fact, generally, some sweets have a universally-known and appreciated shape and practically they would not be sold, if a shape different from that expected by consumers were associated with their "market" name: let us think for example of the so-called "muffins" that have always had an almost circular base and a frustoconical shape, while, on the contrary "plum cakes" have a shape that substantially follows that of a parallelepiped in a faithful manner.

US-A-2 145 481 discloses a paper cup used as a sandwich holder which includes impleated areas in the sidewall but a constantly oval bottom contour.

Adopting "elongated" bun cases for some types of goods can therefore involve, when the product is to be sold, a weak interest by the purchasers and obviously this would constitute a serious damage for producers.

Under this situation the technical problem underlying the present invention is solved by a container for cakes, sweet goods and foodstuffs in general in accordance with the appended claim 1. Particular embodiments thereof are defined in the dependent claims.

Description of some preferred but not exclusive embodiments of a container in accordance with the invention is now given by way of non-limiting example, with the aid of the accompanying drawings, in which:

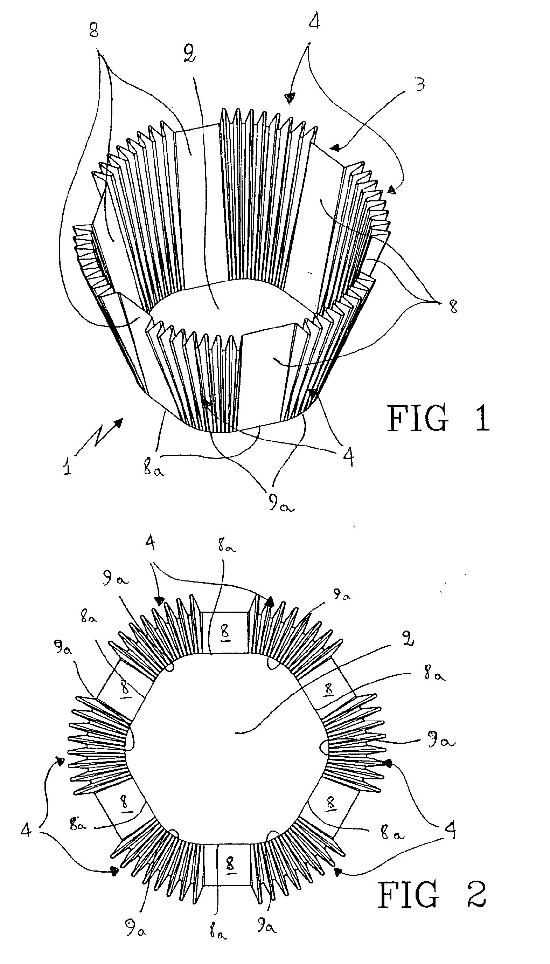

- Fig. 1 is a perspective view of a first embodiment of the container of the invention;
- Fig. 2 is a top view of the container in Fig. 1;
- Figs. 3 and 4 are perspective views of two alternative embodiments of the container of the invention; and
- Figs. 5, 6 and 7 show cross-sectional top views of different embodiments of the bottom of the container in accordance with the invention.

With reference to the drawings, the container or bun case in accordance with the invention is generally identified by reference numeral 1.

It comprises a bottom 2 of a substantially circular contour and a side wall 3 having a pleating 4 defining a plurality of ridges 5 and furrows 6.

Ridges 5 extend longitudinally from bottom 2 to a substantially circular opening 7 defining the major base of a frustoconical figure according to which container 1 is shaped and the bottom 3 of which constitutes the minor base.

In an original manner, the side wall 3 has, in addition to said pleating or pleated area 4, at least one substantially flat band 8 adapted to enable gripping by a suction cup of a picking-up apparatus, which band extends from bottom 2 over the whole height of the wall itself and breaks the continuity of the pleated area 4.

The flat band 8 is delimited at bottom 2 by a corresponding rectilinear stretch 8a.

The flat band 8 in the embodiment shown, has a substantially rectangular conformation comprising two major sides 8b (oriented in the longitudinal direction along which the pleated area 4 extends). At all events, if the current requirements make it necessary, this flat band 8 can also have different flat shapes (for example, a trapezoidal or parallelogram shape and so on).

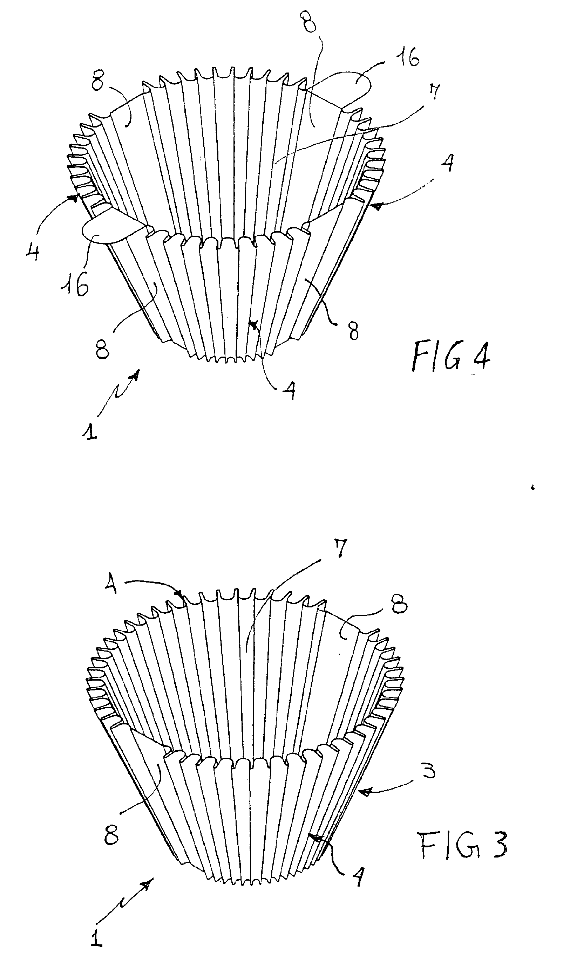

Advantageously, two flat bands 8 may be provided which are disposed diametrically opposite (see Figs. 3, 4, 6 and 7), so that both the suction cups with which a picking-up apparatus of known type is equipped may efficiently adhere to the inner surface of the side wall 3 of a bun case, thereby avoiding dragging along and picking-up of more than one of them.

Practically the contour of bottom 2 comprises, in addition to the rectilinear stretches 8a subtending the flat regions 8, also a predetermined number of curved stretches 9a (that are therefore disposed in a predetermined succession with respect to the rectilinear stretches 8a).

Conveniently, extending from the curved stretches 9a are corresponding portions of the pleated area 4.

For example, in the embodiment showing two flat bands 8 (illustrated in the accompanying drawings), there are two rectilinear stretches 8a belonging to the contour of bottom 2: these rectilinear stretches 8a join the ends of two curved stretches 9a, whereas extending from the rectilinear stretches 8a themselves are the two flat bands provided in the side wall 3.

The ridges 5 and furrows 6 extending in the pleated area 4 from each of the curved stretches 9a have, at bottom 2, respective symmetry axes 5a and 6a each of which in turn diverges from a respective divergence point 10; depending on current requirements, these divergence points 10 can be geometrically disposed in a great number of ways, all conveniently falling within the scope of the present invention.

For example, a single divergence point 10 may be provided which is common for all axes 5a and 6a and which can be disposed on a sector radius 11 of the corresponding curved stretch 9a at a position spaced apart from the centre 12 of bottom 2.

It is also possible for two or more divergence points 10 from which the symmetry axes 5a and 6a originate to be disposed on either side of centre 12 and be mutually spaced apart over a length substantially equal to the extension of each of the rectilinear stretches 8a.

In this way a pleated area 4 can be obtained the ridges 5 and furrows 6 of which delimit rectangular and not trapezoidal flat bands 8.

In fact, if ridges 5 and furrows 6 are such made that their axes all diverge from centre 12 and flattening of some of them is carried out, trapezoidal flat bands 8 could be formed that however would laterally have exceeding triangular portions involving a deformation of the optimal configuration of opening 7.

Still in the case in which two opposite flat bands 8 are present, the present invention may contemplate an advantageous alternative embodiment tending to improve the geometric regularity of the ridges and furrows in the pleated area 4.

This result is achieved if the symmetry axes 5a and 6a of said ridges and furrows are led to diverge, at bottom 2, from a plurality of origin points 13 closer than point 10 of the first embodiment to the centre 12 of bottom 2 that would constitute, in the absence of the flat bands 8, the ideal point from which radial divergence of said symmetry axes is to begin in order to obtain the maximum geometric regularity of ridges 5 and furrows 6.

More specifically in this embodiment for each curved stretch 9a, the axes 5a and 6a of ridges and furrows are substantially disposed spaced apart the same distance from each other and they each diverge from a point of origin 13 thereof which belongs to a curve 14 terminally delimited between the centre 12 of bottom 2 and an end point 15 disposed on the bisecting radius 11 at a spaced position from centre 12.

Practically the end points 15 of the symmetry axes of ridges 5 and furrows 6 are disposed on either side of centre 12 and are mutually spaced over a length substantially equal to the extension of each of the rectilinear stretches 8a.

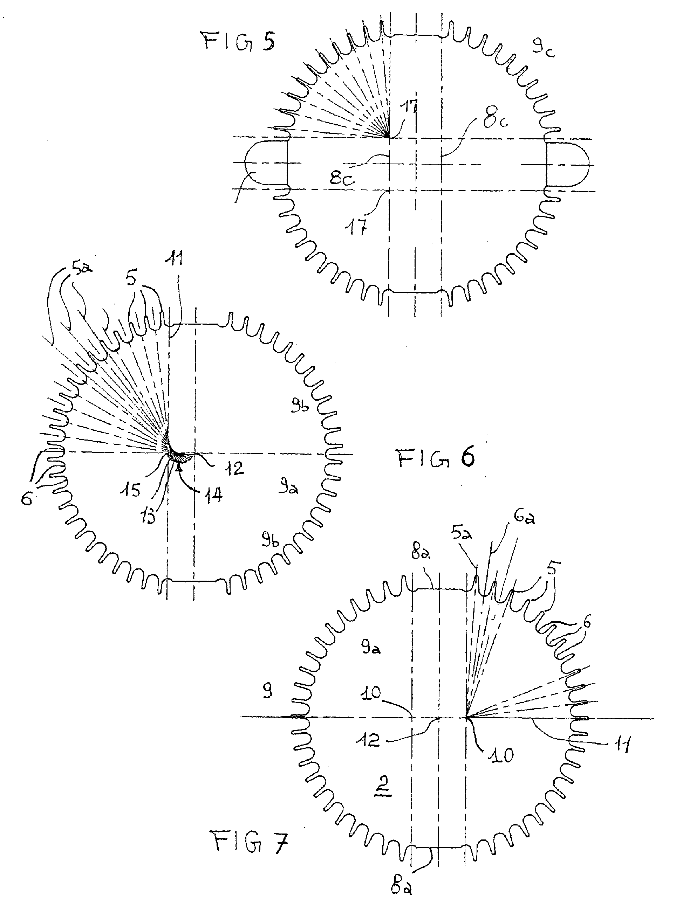

In a third embodiment, shown in Figs. 4 and 5, four flat faces 8 divided into diametrically opposite pairs are provided (see Fig. 5).

One or more flat bands 8 can advantageous have, at opening 7, respective expansions 16 adapted to define grasping tabs for separation of container 1 from the foodstuff housed therein, at the moment of eating it. Conveniently, the presence of these expansions 16 is not to be intended as limited to the third alternative embodiment herein shown, but they can be present in any embodiment of the present invention (independently of the number of the flat bands 8).

At all events, in order to facilitate handling by the machinery, the flat bands 8 designed to match with the suction cups of the picking-up apparatus can be those free of the grasping tabs 16 (because, should not this be the case, said tabs could interfere with the support on which the bun case to be picked up rests during the approaching step of the outer arms of the apparatus and momentary retraction of the side wall regions of the bun case in contact with the outer arms themselves).

In addition, in the third embodiment of the container, the ridges and furrows of the pleated region 4 which extend from each of the contour portions 9c included between two chords 8a of two adjacent flat faces 8 have, at bottom 2, symmetry axes 5a and 6a diverging from a single divergence centre 17 substantially disposed in the intersection of the extensions 8c to the bottom of the contiguous major sides 8b of the adjacent flat bands 8.

Another particularly valuable embodiment of the present invention contemplates the presence of six flat faces 8 which practically are ideally divided into diametrically opposite pairs on the side wall 3 of container 1; in other words, as can be viewed from the accompanying drawings, these six flat faces 8 are disposed in a radially equidistant relationship with respect to each other on the side wall 3, at intervals of sixty degrees from each other. In this case bottom 2 will have a dodecagon contour, consisting of six rectilinear stretches 8a alternated with six curved stretches 9a.

A particularly advantageous aspect of the present invention resides in that all alternative embodiments of container 1 hitherto described, in spite of the complexity of the respective geometries, can be manufactured starting from a single sheet element (that could conveniently be a sheet of paper material for food use); in this way, containers 2 are substantially monolithic and assembling steps for different subcomponents or additional material for interconnection (glues, staples, etc.) are not required.

It should be noted that a further mechanical working can be carried out on the side wall 3 by acting on the ridges 5 and furrows 6 of the pleated region 4 and pressing them upon each other; in this way there will be a tendency to level the side wall 3, causing approaching of the surfaces of ridges 5 and furrows 6 so that they get into mutual contact.

The invention achieves important advantages.

In fact, it enables availability of a container of frustoconical conformation, i.e. having a round shape both at the major and minor bases, which is capable of eliminating the above mentioned drawbacks that, on the contrary, are present in known containers having such a shape, during the step of separating each of them from the stack they form for storage, by use of apparatus provided with suction cups.

It will be recognized that the presence of flat bands on the side wall of the container does not substantially alter either the circular shape of the bottom and of the top opening, or the geometric regularity of the ridges and furrows formed by the pleated portion of the side wall itself.

Therefore, due to the features of the container in accordance with the present invention it is possible to produces cakes and sweet goods having the typical round-shaped base, with an improved production efficiency and a high quality of the finished product.

## Claims

1. A container made of paper material having a frustoconical shape for sweet goods, cakes or foodstuffs in general, comprising a bottom (2) of a substantially circular contour and a side wall (3) having a pleated area (4) longitudinally extending from the bottom to a substantially circular opening (7) opposite to the bottom,
**characterized in that** the contour of said bottom (2) is defined by a predetermined succession of at least one rectilinear stretch (8a) and at least one curved stretch (9a), and further in that said side wall (3) has at least one flat band (8) interposed in said pleated area (4) and extending from the bottom (2) over the whole height of the side wall itself, said flat band (8) being delimited at the bottom (2) by a rectilinear stretch (8a).

2. A container as claimed in claim 1, **characterized in that** said flat band (8) has a substantially rectangular or trapezoidal conformation comprising major or oblique sides (8b) that are substantially oriented in the longitudinal extension direction of the pleated area (4).

3. A container as claimed in claim 2, **characterized in that** at least two flat bands (8) are provided, said bands being disposed at diametrically opposite positions so that the bottom (2) contour comprises at least two curved stretches (9a) from which the pleated area (4) extends and at least two rectilinear stretches (8a) from which the two flat bands (8) extend.

4. A container as claimed in claim 3, **characterized in that** it comprises six flat bands (8) divided into diametrically opposite pairs on the side wall (3), the bottom (2) preferably comprising six rectilinear stretches (8a) and six curved stretches (9a).

5. A container as claimed in anyone of the preceding claims, **characterized in that** at least one flat band (8) has, at said opening (7), at least one respective expansion (16) adapted to define a grasping tab for separation of the container (1) from the foodstuff housed therein.

6. A container as claimed in claim 3, **characterized in that** said pleated area (4) defines a plurality of ridges (5) alternated with furrows (6) and **in that** the ridges (5) and furrows (6) extending from each of said curved stretches (9a) show, at the bottom (2), symmetry axes (5a, 6a) diverging from respective divergence points (10) disposed at predetermined positions of said bottom contour.

7. A container as claimed in claim 6, **characterized in that** at least part of said ridges (5) and/or furrows (6) are pressed against each other, the surfaces of the ridges (5) and/or furrows (6) being brought into mutual contact during said pressing action.

8. A container as claimed in anyone of the preceding claims, **characterized in that** it is made of a single sheet element.

## Patentansprüche

1. Kugelstumpfförmiger Behälter aus Papiermaterial für Süßwaren, Kuchen oder Lebensmittel im Allgemeinen, umfassend einen Boden (2) mit einer im Wesentlichen kreisförmigen Kontur und eine Falten (4) aufweisende Seitenwand (3), die sich ausgehend vom Boden in Richtung einer im Wesentlichen kreisförmigen, dem Boden abgewandten Öffnung (7) in Längsrichtung erstreckt,
**dadurch gekennzeichnet, dass** die Kontur des Bodens (2) durch eine vorgegebenen Folge von mindestens einem geraden Abschnitt (8a) und mindesten einem gekrümmten Abschnitt (9a) festgelegt ist, und überdies dadurch, dass die Seitenwand (3) mindestens ein in den Falten (4) dazwischengeschaltetes flaches Band (8) aufweist, das sich ausgehend vom Boden (2) längs der gesamten Höhe der Seitenwand selbst erstreckt, wobei das flache Band (8) im Bereich des Bodens (2) durch einen geraden Abschnitt (8a) begrenzt ist.

2. Behälter nach Anspruch 1, **dadurch gekennzeichnet, dass** das flache Band (8) eine im Wesentlichen rechteckige oder trapezförmige Ausbildung aufweist, die größere oder schräge Seiten (8b) umfasst, die im Wesentlichen in Längsrichtung der Abwicklung der Falten (4) ausgerichtet sind.

3. Behälter nach Anspruch 2, **dadurch gekennzeichnet, dass** mindestens zwei flache Bänder (8) vorgesehen sind, die derart diametral entgegengesetzt sind, dass die Kontur des Bodens (2) mindestens zwei gekrümmte Abschnitte (9a) umfasst, von denen sich die Falten (4) erstrecken, und mindestens zwei gerade Abschnitte (8a), von denen sich die beiden flachen Ränder erstrecken.

4. Behälter nach Anspruch 3, **dadurch gekennzeichnet, dass** er sechs flache Bänder (8) umfasst, die in zueinander diametral entgegengesetzten Paaren auf der Seitenwand (3) unterteilt sind, wobei der Boden (2) bevorzugter Weise sechs gerade Abschnitte (8a) und sechs gekrümmte Abschnitte (9a) umfasst.

5. Behälter nach einem beliebigen der vorstehenden Ansprüche, **dadurch gekennzeichnet, dass** mindestens ein flaches Band (8) im Bereich der Öffnung (7) mindestens eine entsprechende Erweiterung (16) aufweist, die eine Greifzunge zur Trennung des Behälters (1) von dem in ihm aufgenommenen Lebensmittel festlegt.

6. Behälter nach Anspruch 3, **dadurch gekennzeichnet, dass** die Falten (4) eine Vielzahl von zu Schleifen (6) abwechselnden Zähnen (5) festlegt, und dadurch, dass Zähne (5) und Schleifen (6), die sich von jedem der gekrümmten Abschnitte (9a) erstrecken, im Bereich des Bodens (2) Symmetrieachsen (5a, 6a) aufweisen, die von jeweiligen Divergenzstellen (10) auseinanderlaufen, die in vorgegebenen Konturpositionen des Bodens (2) angeordnet sind.

7. Behälter nach Anspruch 6, **dadurch gekennzeichnet, dass** mindestens ein Teil der Zähne (5) und/oder der Schleifen (6) aufeinandergequetscht sind, wobei die Oberflächen der Zähne (5) und/oder der Schleifen (6) zueinander in der Quetschung in Kontakt sind.

8. Behälter nach einem beliebigen der vorstehenden Ansprüche, **dadurch gekennzeichnet, dass** er in einem einzigen Blattelement ausgeführt ist.

## Revendications

1. Récipient tronconique de matériau en papier pour des confiseries, des gâteaux ou des aliments en général, comprenant un fond (2) ayant un pourtour essentiellement circulaire et une paroi latérale (3) munie d'une zone plissée (4) s'étendant longitudinalement du fond vers une ouverture essentiellement circulaire (7) opposée au fond,
**caractérisé en ce que** le pourtour dudit fond (2) est défini par une suite prédéterminée d'au moins un segment rectiligne (8a) et d'au moins un segment courbe (9a), et en outre **en ce que** ladite paroi latérale (3) a au moins une bande plate (8) interposée dans ladite zone plissée (4) et s'étendant du fond (2) sur toute la hauteur de la paroi latérale elle-même, ladite bande plate (8) étant délimitée au fond (2) par un segment rectiligne (8a).

2. Récipient selon la revendication 1, **caractérisé en ce que** ladite bande plate (8) a une conformation sensiblement rectangulaire ou trapézoïdale comprenant des grands côtés ou côtés obliques (8b) qui sont essentiellement orientés dans la direction de l'extension longitudinale de la zone plissée (4).

3. Récipient selon la revendication 2, **caractérisé en ce qu'**on prévoit au moins deux bandes plates (8), lesdites bandes étant disposées à des positions diamétralement opposées de telle sorte que le pourtour du fond (2) a au moins deux segments courbes (9a) desquels s'étend la zone plissée (4) et au moins deux segments rectilignes (8a) desquels s'étendent les deux bandes plates (8).

4. Récipient selon la revendication 3, **caractérisé en ce qu'**il comporte six bandes plates (8) divisées en paires diamétralement opposées sur la paroi latérale (3), le fond (2) comprenant de préférence six segments rectilignes (8a) et six segments courbes (9a).

5. Récipient selon l'une quelconque des revendications précédentes, **caractérisé en ce qu'**au moins une bande plate (8) a au moins une expansion respective (16) à son ouverture, laquelle est apte à définir une languette faisant fonction de poignée pour la séparation entre le récipient (1) et l'aliment y logé.

6. Récipient selon la revendication 3, **caractérisé en ce que** ladite zone plissée (4) définit une pluralité de portions saillantes (5) alternées avec des sillons (6) et **en ce que** les portions saillantes (5) et les sillons (6) s'étendant de chacun desdits segments courbes (9a) présentent, au fond (2), des axes de symétrie (5a, 6a) divergents de points de divergence respectifs (10) disposés à des positions prédéterminées dudit pourtour du fond.

7. Récipient selon la revendication 6, **caractérisé en ce qu'**au moins certains desdits sillons (6) et/ou desdites portions saillantes (5) sont pressés les uns contre les autres, les surfaces des portions saillantes (5) et/ou des sillons (6) étant amenées en contact réciproque pendant l'action de pressage.

8. Récipient selon l'une quelconque des revendications précédentes, **caractérisé en ce qu'**il est obtenu d'un seul élément en feuille.
